# EUROPÄISCHE PATENTSCHRIFT

(11) **EP 1 808 320 B1**
(45) Veröffentlichungstag und Bekanntmachung des Hinweises auf die Patenterteilung: **18.11.2009**
(21) Anmeldenummer: 07000730.7
(22) Anmeldetag: 15.01.2007
(51) Int. Cl.: B60J 7/00, B60R 13/02

(54) **Verschiebbares Verkleidungsteil und Verfahren zu dessen Herstellung**
Slidable trim component and method of manufacturing the same
Elément d'habillage mobile et procédé pour sa fabrication

(30) Priorität: 16.01.2006 DE 102006002007
(43) Veröffentlichungstag der Anmeldung: 18.07.2007
(73) Patentinhaber: Webasto AG, 82131 Stockdorf (DE)
(72) Erfinder: Wimmer, Rudolf, 82110 Germering (DE)
(74) Vertreter: Grünberg, Thomas

(56) Entgegenhaltungen:
- DE-A1- 10 057 074
- DE-A1- 10 125 764
- DE-A1- 10 203 196
- DE-A1- 19 624 734
- DE-A1-102004 007 887

## Beschreibung

Die vorliegende Erfindung betrifft ein verschiebbares Verkleidungsteil nach dem Oberbegriff von Anspruch 1.

Gerade im Bereich der Personenkraftfahrzeuge sind als verschiebbare Verkleidungsteile Schiebehimmel für eine von einem Verschlusselement abdeckbare Dachöffnung einer Fahrgastkabine bekannt, die üblicherweise in Fahrzeuglängsrichtung in einer Ebene parallel zu einer Dachebene der Fahrzeugkabine verschiebbar sind. Aufgrund der großen wirtschaftlichen Bedeutung soll nachfolgend ohne Beschränkung der Erfindung nur auf diesen Anwendungsfall eingegangen werden.

Ein Schiebehimmel kann je nach Ausführungsform zur Regulierung der Entlüftung der Fahrgastzelle und bei Einsatz zusammen mit einem transparenten Deckel zur Abdeckung der Dachöffnung auch zur Regulierung bzw. Dämpfung eines Lichteinfalls genutzt werden. In einer Schließstellung eines derartigen Schiebehimmels ist neben der Sicht aus der Fahrgastkabine auf die Dachöffnung aus äsethischen Gründen auch ein Blick auf ein jeweiliges Verschlusselement verdeckt.

Die DE 101 25 764 A1 zeigt ein Verbindungselement zur Befestigung und bzw. beweglichen Lagerung eines verschiebbaren Kunststoffteils in Form eines Innenverkleidungsteils für ein Kraftfahrzeug. Das Verbindungselement umfasst einen bei der Urformung in das Kunststoffteil einformbaren Befestigungsbereich sowie mehrere Verbindungs- bzw. Lagerbereiche, mit denen das Kunststoffteil in Gleitschienen verschiebbar gelagert werden kann. Der Befestigungsbereich und/oder der Verbindungs- bzw. Lagerbereich sind jeweils zumindest teilweise mit einem Kunststoffmaterial umspritzt, um einen festen Gleitschuh auszubilden.

Da in modernen Kraftfahrzeugen gerade transparent abgedeckte Dachöffnungen von immer größeren Abmessungen Einsatz finden, werden Schiebehimmel fortschreitend mehr als Windschott ausgebildet und müssen daher fortschreitend zur Aufnahme von Kräften und einer Formgebung unter Wahrung einer optimalen Kopffreiheit und Geometrie einer Innenraumauskleidung innerhalb der Fahrgastzelle mechanisch verstärkt ausgeführt werden. Auch bei geringer eigener Bauhöhe und guter mechanischer Stabilität des Schiebehimmels als Dachraum-Verkleidungselement können nun aufgrund der Stabilität und der großen Fläche des Schiebehimmels Geräusche sogar verstärkt in den Fahrgastraum abgestrahlt werden. Im Gegensatz zu einer Betätigung des Verschlusselementes der Dachöffnung selber wird ein Schiebehimmel von Fahrer oder Beifahrer in der Regel auch von Hand bedient. Zur Dämpfung von Anschlaggeräuschen bei Erreichen einer jeweiligen Endstellung des Schiebehimmels oder auch zur Reduzierung der Verfahrgeschwindigkeit des Schiebehimmels bei dessen Betätigung werden daher nach dem Stand der Technik Gummipuffer an angrenzende unverschiebliche Bauteile des Schiebehimmels oder Dämpfungsleisten vorgesehen, wie beispielsweise in der DE 10 2004 007 887 A1 offenbart. Vom ästhetischen Standpunkt her werden aufgrund einer besseren Abdeckbarkeit durch den Schiebehimmel im geschlossenen Zustand direkt an dem Schiebehimmel mit zusätzlichen Befestigungselementen montierte Gummipuffer bevorzugt eingesetzt.

Es ist daher Aufgabe der vorliegenden Erfindung, ein verschiebbares Verkleidungsteil der eingangs genannten Art in Form eines Schiebehimmels mit guten akustischen Eigenschaften unter Senkung des Fertigungsaufwandes weiter zu bilden.

Diese Aufgabe wird jeweils durch die Merkmale des unabhängigen Anspruchs gelöst.

Nach dem Stand der Technik werden an verschiebbaren Verkleidungsteilen in Form von Schiebehimmeln zur Montage von Gummipuffern spezielle Aufnahmen benötigt. Diese Aufnahmen sind in den beiden Bewegungsrichtungen gesehen im Bereich von zwei Stirnkanten des Schiebehimmels angeordnet.

Als ein Herstellverfahren für formstabile Schiebehimmel hat sich ein Verfahren gemäß der DE 102 03 196 A1 bewährt. Hiernach umfasst ein Schiebehimmel eine obere Deckschicht, eine vom Fahrgastinnenraum sichtbare untere Deckschicht sowie eine diese beiden Deckschichten starr miteinander unter vordefinierbarem Abstand bindende geschäumte Kunststoffschicht. Ein derartiger Schiebehimmel wird insbesondere nach einer sogenannten Mu-Cell-Spritzgusstechnik hergestellt, wobei zwischen die beiden Deckschichten in einen Außenbereich herausragende Fortsätze eingeschäumt werden können. Derartige Fortsätze können über die direkte Offenbarung der genannten Schrift hinaus je nach Positionierung an einer der vier Kanten eines Schiebehimmels neben Gleitelementen zur Führung in parallel zu einer Dachöffnung verlaufenden Schienen auch Gummipuffer tragen. Derartige Fortsätze stellen jedoch in jedem Fall zusätzliche Bauteile dar. Zudem ragen nun Gummipuffer oder sonstige mindestens teilweise federelastische Dämpfungselemente über eine Außenkontur eines Schiebehimmels hinaus und beanspruchen damit zusätzlichen Bauraum, der im Bereich jeder Schiebedachkonstruktion generell sehr knapp bemessen ist.

Zur Abhilfe und als Lösung der vorstehend beschriebenen Aufgabe wird mindestens ein Dämpfungselement aus einem gummielastischen Kunststoffmaterial in den Schiebehimmel an einer vorbestimmten Dämpfungsposition dadurch integriert, dass das Dämpfungselement als vorgefertigtes Teil durch mindestens eine Komponente des Schiebehimmels umspritzt oder umschäumt ist, oder dadurch, dass das Dämpfungselement aus einem sich plastisch verfestigenden Material in eine entsprechende Ausnehmung des Schiebehimmels eingeformt oder insbesondere warm eingespritzt ist. Durch die vorstehend vorgeschlagenen Maßnahmen wird auch bei Integration eines Dämpfungselements ein Fortsatz als separates Bauteil eingespart und zugleich eine stetige und Bauraum-optimierte Außenkontur des Schiebehimmels geschaffen. Dadurch wird ein zur Verfügung stehender Bauraum nicht mehr eingeschränkt. Auch wird so zur Kostensenkung dadurch beigetragen, dass nicht mehr Bauraum und Material benötigt wird, als zwingend erforderlich ist. Zudem kann ein erfindungsgemäß angeordnetes Dämpfungselement, das vorzugsweise als Gummipuffer ausgeführt ist, auch über die Lebenszeit eines Schiebedachs hinweg selbst bei dauernder Belastung nicht mehr verloren gehen.

Ein entsprechendes Fertigungsverfahren wird um den Schritt des Einlegens eines Fortsatzes im späteren Aufnehmen von mindestens einem Dämpfungselement zwischen die Bestandteile eines Schiebehimmels abgekürzt. Fortsätze als separate Elemente entfallen. Zudem stellen das Einlegen eines vorgefertigten Dämpfungselements, wie auch das nachträgliche Einspritzen eines Dämpfungselements in einen Schiebehimmel unter Anwendung eines plastifizierten Kunststoffmaterials Verfahrenschritte dar, die als Zwei-Komponenten- bzw. sogenannte 2K-Verfahren fertigungstechnisch gut beherrschbar sind. Zudem kann nun im Fertigungsprozess durch Abfrage der jeweiligen Maschinen sichergestellt werden, dass Dämpfungselemente auch wirklich in bzw. an einem gerade gefertigten Schiebehimmel angeordnet worden sind.

Damit zeichnet sich jede der vorstehend aufgeführten Lösungen durch den Entfall spezieller Aufnahmen für Gummipuffer bei Reduzierung eines erforderlichen Bauraums aus. Zugleich ist eine Verliersicherheit eines Dämpfungselements während der Lebensdauer des Schiebedachs durch die Integration in den Dachhimmel sichergestellt. Zudem ist ein Dämpfungselement in einem erfindungsgemäßen Schiebehimmel im Einsatz vorzugsweise dadurch optisch kaum sichtbar, da es farblich an eine jeweils angrenzende Innenraumverkleidung angepasst ist.

Nachfolgend werden Ausführungsbeispiele eines erfindungsgemäßen Schiebehimmels unter Darstellung eines Herstellungsverfahrens bei Bezugnahme auf die Figuren der Zeichnung zur Nennung weiterer Vorteile und Eigenheiten näher beschrieben. Es zeigen:
- Figur 1:: einen Ausschnitt aus einer ersten Ausführungsform eines Schiebehimmels in dreidimensionaler Ansicht;
- Figur 2:: eine Darstellung analog von Figur 1 zu einer zweiten Ausführungsform eines Schiebehimmels und
- Figur 3:: eine dreidimensionale Ansicht eines vorgefertigten Dämpfungselements aus einem gummielastischen Kunststoffmaterial.

Über die zu beschreibenden Abbildungen der verschiedenen Ausführungsbeispiele hinweg werden nachfolgend einheitlich gleiche Elemente mit gleichen Namen und Bezugszeichen bezeichnet.

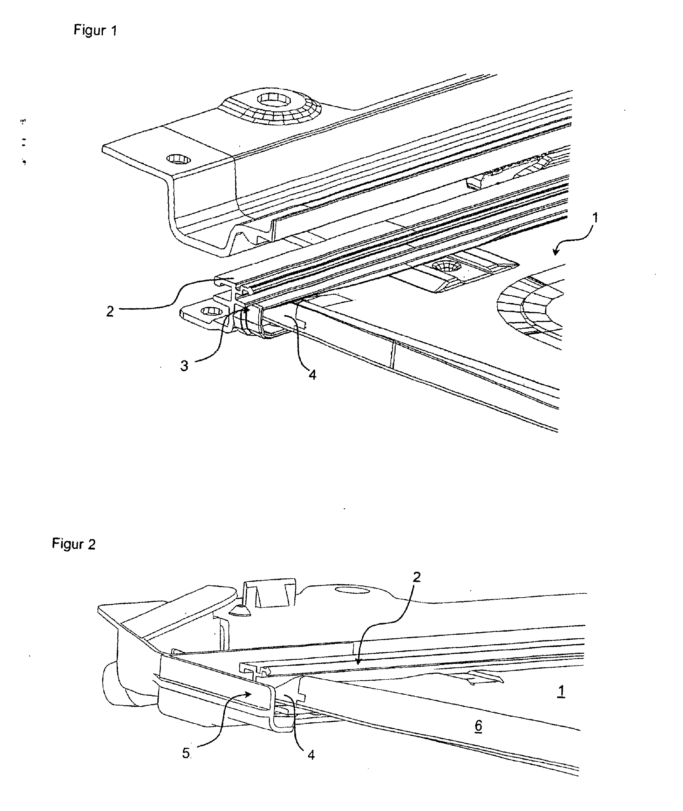

Die dreidimensionale Darstellung von Figur 1 zeigt einen Ausschnitt aus einem Schiebedachsystem. Unter einem Schenkel eines regelmäßig U-förmigen Rahmens des hier nicht weiter dargestellten Schiebedachs ist ein verschiebbares Verkleidungsteil in Form eines Schiebehimmels 1 in einer Profil-Führungsschiene 2 aus Aluminium verschieblich angeordnet. Das Profil der Alu-Führungsschiene 2 ist durch einen Endanschlag 3 verschlossen. In einer vollständig geschlossenen Endstellung läuft der in der Schiene 2 verschieblich gelagerte Schiebehimmel 1 mit einem Dämpfungselement 4 in der angedeuteten Art und Weise in den Endanschlag 3 hinein. Bei diesem Vorgang wird auch bei höherer Anschlaggeschwindigkeit jede Geräuschentwicklung sehr stark durch das Dämpfungselement 4 gemindert. Auch springt der Schiebehimmel 1 durch Einwirkung des Dämpfungselementes 4 nicht aus der geschlossenen Stellung heraus zurück in eine teilweise geöffnete Lage.

Analog zu der Darstellung von Figur 1 zeigt Figur 2 ebenfalls einen Ausschnitt einer Schiebedachkonstruktion mit Schiebehimmel 1, der sich nahe einer geschlossenen Endlage befindet. Hier ist ein Endanschlag 5 an einem Rahmenendstück bzw. Rahmenvorderteil angeformt. Auch in diesem Anwendungsfall steht in einer Endlage des Schiebehimmels 1 eine Stirnkante 6 nur mit dem darin stetig integrierten Dämpfungselement 4 mit dem Endanschlag 5 in Kontakt.

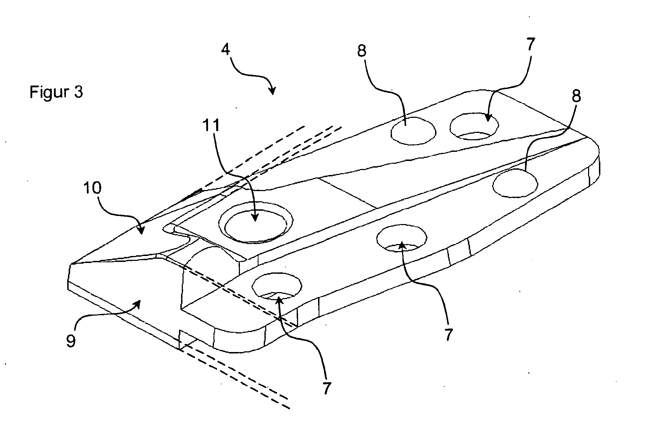

Die Abbildung von Figur 3 zeigt in einer dreidimensionalen Ansicht das Dämpfungselement 4 gemäß der Ausführungsformen von Figur 1 und Figur 2 als vorgefertigtes Bauteil. Bei diesem Dämpfungselement 4 handelt es sich um ein vorgefertigtes Spritzgussteil aus einem gummielastischen Kunststoffmaterial, das im Rahmen eines Fertigungsverfahrens gemäß der DE 102 03 196 A1 in einer Spritzgussform zwischen einer oberen und einer unteren Deckschicht und von einer aufgeschäumten Kunststoffschicht mindestens teilweise umschlossen wird. Hierzu weist das Dämpfungselement 4 eine nach Abschluss des Herstellungsverfahrens im Schiebehimmel 1 zwischen der Oberschicht und der Unterschicht unsichtbar verlaufende innere Struktur mit Ausnehmungen 7 und Wölbungen 8 auf. Durch diese Ausnehmungen strömt im Herstellungsverfahren geschäumtes Kunststoffmaterial hindurch. Die Wölbungen 8 vergrößern zudem die Oberfläche des Dämpfungselementes 4 mit dem umschließenden geschäumten Kunststoffmaterial. Hierdurch wird insgesamt auf zweierlei Arten eine formschlüssige Fixierung in dem Schiebehimmel 1 als Spritzguss-Produkt bewirkt.

In der aus den Abbildungen der Figur 1 und Figur 2 ersichtlichen und in Figur 3 nochmals durch gestrichelte Linien angedeuteten Art und Weise ist das Dämpfungselement 4 derart in den Schiebehimmel 1 integriert, dass sich ein stetiger Verlauf einer sichtbaren Außenoberfläche ergibt. Insbesondere wird ein für einen Kontakt mit einem Endanschlag 3, 5 zugänglicher Pufferbereich 9 an dem Dämpfungselement 4 geschaffen, der sich ohne zusätzlichen Bauraum zu beanspruchen in die Form der Stirnkante 6 des Schiebehimmels 1 einfügt. Das Dämpfungselement 4 weist eine Schräge 10 in einer Einbaulage zu der zur Führungsschiene 2 hin orientierten Seite hin auf. Hierdurch wird sichergestellt, dass das Dämpfungselement 4 in den vorliegenden Ausführungsbeispielen keine Trag- oder Gleiteigenschaften im Zusammenspiel mit der Führungsschiene 2 übernimmt. Es wird vielmehr durch diese Formgebung, jeglicher Berührungskontakt zwischen dem Dämpfungselement 4 und der Führungsschiene 2 mit entsprechenden Toleranzen sicher vermieden.

Zur Erhöhung der Elastizität des Dämpfungselementes 4 ist nahe des von außen zugänglichen Pufferbereichs 9 eine durchgehende Ausnehmung 11 vorgesehen, die zur Erhöhung der Elastizität des Dämpfungselementes 4 erforderlichen Freiraum reversibel zur Verfügung stellt. Zugleich dient die Ausnehmung 11 als Aufnahme des vorgefertigten Teils zum Einlegen in die Form während der Fertigung.

Ohne separate Montage wird durch ein vorstehend dargestelltes Dämpfungselement 4, das gemäß eines Fertigungsverfahrens der Anmelderin im Fertigungsprozess eines Schiebehimmels an vorbestimmter Stelle eingebettet wird gegenüber bekannten Schiebehimmeln sogar noch einen Verkürzung und somit Einsparung zusätzlichen Bauraumes im Bereich eines Schiebedachsystems erzielt. Auch wenn ein derartiges Dämpfungselement in einer hier nicht weiter dargestellten Art und Weise in ein mit entsprechenden Hohlräumen und Aufnehmungen vorgefertigtes Schiebehimmelbauteil eingespritzt wird, so ist ein derartiges Dämpfungselement über die Lebensdauer des Schiebehimmels gesehen unverlierbar und zudem in der Fertigung über eine Werkzeugabfrage nachvollziehbar eingesetzt. Zudem sind vorstehend beschriebene Dämpfungselemente farblich mit ihrer unmittelbaren Umgebung so abzustimmen, dass sie gegenüber benachbarten Bestandteilen einer Dachraumverkleidung kaum auffallen und damit vom ästhetischen Gesamteindruck her nahezu unsichtbar sind.

### Bezugszeichenliste

- 1: Schiebehimmel
- 2: Alu-Profilleiste / Führungsschiene
- 3: Endanschlag
- 4: Dämpfungselement
- 5: Endanschlag
- 6: Stirnkante
- 7: Ausnehmung
- 8: linsenförmige Wölbung
- 9: Pufferbereich
- 10: Schräge
- 11: große Ausnehmung

## Patentansprüche

1. Verschiebbares Verkleidungsteil in Form eines Schiebehimmels (1) für ein Fahrzeugdach, in dem eine von einem Verschlusselement abdeckbare Dachöffnung einer Fahrgastkabine vorgesehen ist, wobei der Schiebehimmel (1) in Fahrzeuglängsrichtung in einer Ebene parallel zu einer Dachebene der Fahrzeugkabine zwischen zwei Endlagen in einer Führungsschiene (2) verschiebbar angeordnet ist,
**dadurch gekennzeichnet, dass**
mindestens ein Dämpfungselement (4), das in einer Endlage des Schiebehimmels (1) mit einem Endanschlag (3,5) in Kontakt steht und aus einem gummielastischen Kunststoffmaterial besteht, in dem Schiebehimmel (1) an einer vorbestimmten Dämpfungsposition **dadurch** integriert ist, dass das Dämpfungselement (4) als vorgefertigtes Teil durch mindestens eine Komponente des Schiebehimmels (1) umspritzt oder umschäumt ist, oder **dadurch**, dass das Dämpfungselement (4) aus einem sich plastisch verfestigenden Material in eine entsprechende Ausnehmung des Schiebehimmels (1) eingeformt oder eingespritzt ist, wobei das Dämpfungselement (4) einen für einen Kontakt mit dem Endanschlag (3,5) zugänglichen Pufferbereich (9) aufweist, der sich in die Form einer Stirnkante (6) des Schiebehimmels (1) einfügt.

2. Verkleidungsteil nach Anspruch 1, **dadurch gekennzeichnet, dass** der Schiebehimmel (1) eine obere Deckschicht, eine vom Fahrgastinnenraum sichtbare untere Deckschicht sowie eine diese beiden Deckschichten starr miteinander unter vordefinierbarem Abstand bindende geschäumte Kunststoffschicht aufweist, in der das Dämpfungselement (4) zum Anschlagen mit dem Endanschlag (3, 5) der Führungsschiene (2) vorgesehen ist.

3. Verkleidungsteil nach einem der vorhergehenden Ansprüche, **dadurch gekennzeichnet, dass** das Dämpfungselement (4) farblich an eine jeweils angrenzende Innenraumverkleidung angepasst ist.

## Claims

1. Slidable trim component in the form of a sliding roof lining (1) for a vehicle roof in which a roof opening is provided in a passenger cabin, said roof opening being coverable by a closure element, wherein the sliding roof lining (1) is arranged in a manner such that it can be slid in the longitudinal direction of the vehicle in a plane parallel to a roof plane of the vehicle cabin between two end positions in a guide rail (2), **characterized in that** at least one damping element (4), which is in contact with an end stop (3, 5) in an end position of the sliding roof lining (1) and is composed of rubber-elastic plastics material, is integrated in the sliding roof lining (1) at a predetermined damping position by the damping element (4) as a prefabricated part being insert moulded or foamed by at least one component of the sliding roof lining (1), or by the damping element (4) being moulded or injected from a plastically curing material into a corresponding recess of the sliding roof lining (1), the damping element (4) having a buffer region (9) which is accessible for contact with the end stop (3, 5) and is fitted into the shape of an end edge (6) of the sliding roof lining (1).

2. Trim component according to Claim 1, **characterized in that** the sliding roof lining (1) has an upper cover layer, a lower cover layer which is visible from the passenger compartment, and a foamed plastics layer which binds said two cover layers rigidly to each other at a predefinable distance and in which the damping element (4) for striking against the end stop (3, 5) of the guide rail (2) is provided.

3. Trim component according to one of the preceding claims, **characterized in that** the damping element (4) is matched in colour to a respectively adjacent interior trim.

## Revendications

1. Elément d'habillage mobile sous forme de plafond coulissant (1) pour un toit de véhicule, dans lequel on prévoit une ouverture de toit d'un habitacle de conduite pouvant être recouverte par un élément de fermeture, le plafond coulissant (1) étant disposé de manière mobile dans la direction longitudinale du véhicule dans un plan parallèlement à un plan du toit de l'habitacle de conduite entre deux positions extrêmes dans un rail de guidage (2),
**caractérisé en ce que**
au moins un élément d'amortissement (4) qui est en contact avec une butée de fin de course (3, 5) dans une position extrême du plafond coulissant (1), et se compose d'un matériau en plastique élastomère, est intégré dans le plafond coulissant (1) au niveau d'une position d'amortissement prédéterminée par le fait que l'élément d'amortissement (4) est enveloppé par pulvérisation ou moussage en tant que pièce préfabriquée par au moins un composant du plafond coulissant (1), ou par le fait que l'élément d'amortissement (4) est moulé ou pulvérisé à partir d'un matériau se solidifiant plastiquement dans un évidement correspondant du plafond coulissant (1), l'élément d'amortissement (4) présentant une région tampon (9) accessible pour un contact avec la butée de fin de course (3, 5), qui s'insère dans la forme d'une arête frontale (6) du plafond coulissant (1).

2. Elément d'habillage selon la revendication 1, **caractérisé en ce que** le plafond coulissant (1) présente une couche de finition supérieure, une couche de finition inférieure visible depuis l'habitacle de conduite, ainsi qu'une couche de plastique moussé reliant ces deux couches de finition rigidement l'une à l'autre avec un espacement prédéfinissable, dans laquelle l'élément d'amortissement (4) est prévu pour venir en butée avec la butée de fin de course (3, 5) du rail de guidage (2).

3. Elément d'habillage selon l'une quelconque des revendications précédentes, **caractérisé en ce que** l'élément d'amortissement (4) est adapté de par sa couleur à un habillage interne de l'habitacle qui lui est adjacent.
